(19) Europäisches Patentamt / European Patent Office / Office européen des brevets

(11) **EP 3 386 312 B1**

(12) **EUROPEAN PATENT SPECIFICATION**

(45) Date of publication and mention
of the grant of the patent:
**21.10.2020 Bulletin 2020/43**

(21) Application number: **16819024.7**

(22) Date of filing: **09.12.2016**

(51) Int Cl.:
*A23F 5/04* *(2006.01)*   *A23F 5/10* *(2006.01)*

(86) International application number:
**PCT/EP2016/080490**

(87) International publication number:
**WO 2017/098002 (15.06.2017 Gazette 2017/24)**

(54) **METHOD FOR ROASTING COFFEE BEANS**

VERFAHREN ZUM RÖSTEN VON KAFFEEBOHNEN

PROCEDE DE TORREFACTION DE GRAINS DE CAFE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.12.2015 EP 15199644**

(43) Date of publication of application:
**17.10.2018 Bulletin 2018/42**

(73) Proprietor: **Société des Produits Nestlé S.A.**
**1800 Vevey (CH)**

(72) Inventors:
• **ELSBY, Kevan**
**1350 Orbe (CH)**
• **POISSON, Luigi**
**1796 Courgevaux (CH)**
• **MESTDAGH, Frédéric**
**1000 Lausanne 26 (CH)**
• **MURPHY, Sean**
**1304 Allens (CH)**

(74) Representative: **Lomholt, Stig Bredsted**
**Société des Produits Nestlé S.A.**
**Avenue Nestlé 55**
**1800 Vevey (CH)**

(56) References cited:
**EP-A2- 1 038 445    GB-A- 1 186 606**
**IE-A1- 20 000 694**

## Description

## FIELD OF THE INVENTION

The invention relates to a method for uniformly roasting coffee beans at industrial scale within the same roasting chamber.

## BACKGROUND OF THE INVENTION

Any discussion of the prior art throughout the specification should in no way be considered as an admission that such prior art is widely known or forms part of common general knowledge in the field.

Roasting is a process commonly applied to manufacture flavourful and tasty beverages from plant material (e.g. coffee, chicory, cereal), leading to colour development, aroma and flavour generation, but also to the formation of undesirable compounds. Roasting of coffee beans brings out the aroma and flavour from precursors present in the green coffee beans.

Regardless of the roasting method used, the roasting process consists of endothermic and exothermic stages, or absorbing and generating heat, then stopping the roasting process through rapid cooling.

Coffee beans are roasted using heated air (roasting gas or hot combustion gases or hot air) at a temperature up to approximatively 400°C. The roasting air temperature either has a constant set value, or is a function of time which defines a roasting air temperature profile. Basically, the heat is transmitted to the coffee beans in the roaster by the transmission of heat from the roasting chamber or by convection from the heated roasting gas to the coffee beans. The beans are moved during roasting, sometimes by mechanical agitation and sometimes by fluidization by roasting air. The roasting process is stopped by cooling the coffee beans quickly with cool air or addition of water, or combination of cool air and water. This cooling step (also known as quenching step) can be performed in the roasting chamber or in separate quenching chamber. Roasters-typically operate in batch or in continuous modes, in one of three roaster types: drum, paddle or fluidized bed roasters. There are large-scale roasters from typically 30 kg to 600 kg batch size for application at industrial scale, or smaller roasters, used in retail stores or at home for example.

It is known that the roasting parameters have to be carefully adapted to the origin and grade of the coffee beans, as these parameters will strongly influence the aroma and taste developed in the roasted coffee beans, and also impact on the development of undesirable compounds. In particular, parameters such as the roasting temperature profile and uniformity of roasting influence the results of the roasting.

Roasting at industrial scale using drum roasters or paddle roasters has drawbacks. For example, roasting temperature profile and uniformity of roasting are more difficult to measure and control in such roasters. EP 1 038 445 A2 discloses a two stage coffee roasting process. IE 20000694 A1 discloses an improved manufacturing process for producing a roasted coffee product. GB 1 186 606 A1 discloses an improved continuous process for roasting coffee and an apparatus therefor.

US 5,681,607 describes a method for improving the quality of roasted coffee beans comprising the roasting in a drum roaster of green coffee beans with steam over a period of 50 to 300 seconds, at a steam temperature of 251 to 400°C, at a pressure of 6.5 to 20.0 bar, and then roasting of the coffee beans with steam over a period of 60 to 800 seconds at a steam temperature of 251 to 400 °C substantially at atmospheric pressure. Although this roasting method is intended to improve the aroma of the coffee, it has the major disadvantage to be technically complex as it implies a first phase at an elevated pressure and a second phase at atmospheric pressure.

At industrial scale, rotating fluidized bed (RFB) roasters deliver improved roasting temperature measurement and control with improved uniformity of roast versus paddle and drum roasters. Changing the heating rate in a controlled manner can be achieved currently with RFB roasters having two roasting chambers, each of them being heated at different temperatures. However, this solution has the major disadvantage that the cost for the equipment is high, as well as the complexity of the line design required. Moreover, the flexibility and control of the roasting temperature profiles remain limited within each roasting chamber.

Notably, it is difficult to decrease the roasting air temperature rapidly within any roasting chamber just by decreasing the power from the burner, and thereby decreasing the temperature of the stream of combustion gases circulating in the roasting chamber, because there are limits to how fast the energy delivered by the burner can be reduced at industrial scale.

US 3,964,175 describes a roasting method for transferring heat efficiently from air to the coffee beans, thereby improving the uniformity of the roasting. The disclosed fluidized bed roaster comprise at least one roasting chamber in which the heated air is blown upwards into a recirculating fluidized bed of coffee bean mass thereby allowing efficient transfer of the heat to coffee beans with uniform roasting. At the desired point in the roasting cycle, the roasted coffee beans are transferred into a cooling chamber to stop the roasting. This set up is used at industrial scale up to 450 kg batch load. Disadvantages of this type of roaster is that there are limitations to the type of roasting temperature profiles feasible at industrial scale. In particular the existing set up does not allow temperature profiles that best mitigate undesirable compounds such as Acrylamide.

Acrylamide is a Maillard reaction product formed during heat treatment from precursors such as asparagine and reducing sugars. During roasting, coffee beans are subjected to high temperatures (typically in the range of 220°C to 250°C). It is known that Acrylamide is formed during roasting. The free asparagine concentration in green coffee beans lies within a range typically between from 30 to 90 mg/100g. Experiments have demonstrated that Acrylamide is also degraded during roasting. For example, it was demonstrated in cereals (e.g. barley) that Acrylamide is formed at temperatures above 120 °C, with a maximum at 150°C. Above the 150°C, the level of Acrylamide decreases with continued roasting (Acrylamide Toolbox 2013, FoodDrink Europe, page 49). In coffee, Acrylamide is formed early in the roasting cycle, reaching more than 7 mg/kg, and then declining during the roasting cycle as asparaginase is depleted (Processing and Impact on active components in food, V.R. Preedy, Academic Press, 2014, page 577). Darker roasting tends to reduce Acrylamide if carefully fixed in narrow ranges of roasting temperature but dark roasting has significant negative impact on the sensory properties of the product. Therefore, there is currently no satisfactory industrial solution to mitigate Acrylamide levels by applying diverse roasting temperature profiles that are beneficial for Acrylamide mitigation. Alternatively, level of Acrylamide could be mitigated, for example, by roasting green coffee beans in which the level of precursors have been reduced, typically with lower levels of asparagine for example by pre-treating the green coffee beans with asparaginase. However, this solution has major drawbacks, such as increased costs, manufacturing complexity or impact on sensory profile (i.e. colour, taste, and aroma).

As a consequence, there is a need for a method for roasting coffee beans with diverse roasting temperature profiles allowing reduction of Acrylamide levels at industrial scale, while preserving the coffee attributes (i.e. taste, aromas and colour). In other words, there is a need for a method of roasting coffee beans that influences the kinetics of thermally active compounds in coffee beans and especially to mitigate the formation of undesirable compounds such as Acrylamide during roasting of the coffee beans whilst preserving the qualities of coffee.

It is therefore an object of the invention to provide a method of roasting coffee beans comprising at least two roasting steps in the same roasting chamber resulting in more diverse roasting temperature profiles not currently feasible at industrial scale and with enhanced uniformity, resulting in the possibility to mitigate levels of undesirable compounds formed during roasting such as Acrylamide without impacting aroma, taste and colour.

## SUMMARY OF THE INVENTION

The inventors have found that a method for roasting coffee beans comprising two heating steps, wherein the roasting temperature profile shows a rapid and sharp change in the heating rates in the two steps, provides a controlled, uniform roasting, while decreasing significantly the level of undesired compounds such as Acrylamide in the roasted coffee beans whilst maintaining the coffee attributes such as colour, taste and aroma.

Accordingly, the present invention provides a method for roasting coffee beans comprising the steps of:

a) heating the coffee beans by a heating rate between 20°C/minute and 40°C/minute until the temperature of the coffee beans is between 160°C and 220°C, and
b) heating the coffee beans by a heating rate between 1°C/min and 10°C/minute,

said heating steps being performed in the same roasting chamber, wherein step b) is performed after step a).

Another aspect of the invention provides the method of roasting coffee beans comprising two steps a) and b), further comprising step c) performed after step b) and comprising heating of the coffee beans by a heating rate between 15°C/minute and 40°C/minute during maximum 3 minutes.

In a third aspect of the invention, the method of roasting coffee beans wherein the ratio between the heating rate of step a) and the heating rate of step b) of the roasting temperature profile is between 3 and 15.

In a fourth aspect of the invention, the method of roasting coffee beans is performed in a rotating fluidized bed roaster.

## BRIEF DESCRIPTION OF THE FIGURES

The present invention is further described hereinafter with reference to some of its embodiments shown in the accompanying drawings in which:

Figure 1 shows the roasting temperature profile according to the present invention compared to the roasting temperature profile obtained in drum roaster with no ambient air introduction.
Figure 2 shows the roasting temperature profile according to the present invention compared to the roasting temperature profile obtained in drum roaster with no ambient air introduction.
Figure 3 shows the roasting temperature profile according to the present invention compared to the roasting temperature profile obtained in paddle roaster with no ambient air introduction.
Figure 4 shows the roasting temperature profile according to the present invention comprising steps a), b) and c).

## DETAILED DESCRIPTION OF SOME EMBODIMENTS OF THE INVENTION

In this specification, the following terms or expression are given a definition that must be taken into account when reading and interpreting the description, examples and claims.

The term "roasting" means a dry, or almost dry, heat treatment of the coffee beans. During roasting drying of the coffee beans takes place. The water content of the coffee beans will typically be reduced from approximatively 12-16% water down to approximatively 2% water. The purpose of roasting is mainly to develop flavour and aroma characteristic from the roasted coffee. These flavours results from processes such as Maillard and pyrolysis reactions.

The expression "roasted coffee beans" refers in the context of the present invention to coffee beans that have been subjected to severe heat treatment driving Maillard and pyrolysis reactions for taste and aroma development, i.e. subjected to roasting temperatures above 140°C.

The term "CTn" refers to an empirical unit lying between 0 and 200 that characterizes the intensity of Infrared (IR) light (904 nm) that is back scattered by the sample when measured with a spectrophotometer, such as Nehaus Neotec's ColorTest II®. The spectrophotometer illuminates the surface of the grounded sample with monochromatic IR light at a wavelength of 904 nm from a semi-conductor source. A photo-receiver, which has been calibrated, measures the amount of light reflected by the sample. The mean value series of measurement is calculated and displayed by electronic circuit. The colour of the coffee beans is directly related to its roast level. For example, green coffee beans have typically a CTn of above 200, extremely lightly roasted coffee beans have typically a CTn of around 150, lightly roasted coffee beans have typically a CTn around 100 and medium-dark coffee beans have typically a CTn of around 70. Very dark roasted coffee beans have typically a CTn around 45.

The expression "roasting temperature profile" refers to the change of temperature during roasting. The temperature of the coffee beans is measured using temperature sensor(s) which is (are) arranged in the roasting chamber such as the sensor(s) is(are) in contact with the coffee beans during roasting to measure the temperature of the coffee beans. The roasting temperature profile is the result of a sequence of the different heating steps used during roasting. Each step may comprise a change in the roasting air temperature and/or air flow rate, for example.

The expression "heating rate" refers to the change in coffee bean temperature over time. This change can be either an increase of the roasting temperature (positive heating rate), maintenance of the temperature at a certain level (constant heating rate) or a decrease in the temperature (negative heating rate).

The expression "end point temperature" refers to the maximum temperature achieved at the end of step a), b) or c) according to the method of the present invention. The roasting can be continued once the end point temperature is reached by maintaining the roasting temperature at this maximum temperature for a certain time, for example until the desired roasted coffee bean attributes including colour are achieved.

The expression "hot combustion gases" refers to the heated air or hot air that circulates into the roasting chamber during combustion. The hot air is also comprised of gas components that are generated during combustion, for example Carbon Monoxide and/or Carbon Dioxide.

The expression "ambient temperature" as to be understood as the typical indoor temperature to which people are generally accustomed. In the scientific and technical context, the ambient temperature is commonly acknowledged to be 20°C.

All percentages are by weight unless otherwise stated. The expression "weight %" and "wt%" are synonymous. They refer to quantities expressed in percent on a dry weight basis.

It is noted that the various aspects, features, examples and embodiments described in the present application may be compatible and/or combined together.

As used in the specification, the words "comprises", "comprising" are not to be interpreted in an exclusive or exhaustive sense. In other words, they are intended to mean "including, but not limited to".

The inventors have found that a method of roasting coffee beans using specific roasting temperature profile is particularly effective to obtain a controlled and uniform roasting of the coffee beans, allowing development of the desired coffee attributes including aroma and taste, while significantly decreasing the level of undesirable compounds generated during the heat treatment such as Acrylamide.

Coffee roasting is a chemical process by which volatile and non-volatile components are generated or modulated in-ways that impact taste, aroma, colour and amount of undesirable compounds. Traditionally, the roasting of coffee beans can be described in several steps. In a first step, the coffee beans are dried, develop a yellow colour the beans start to smell like toast or popcorn. This first step is endothermic. A second step, often called the first crack, occurs usually at approximatively 205 °C; in this step, the beans double in size, develop a light brown colour, and are subjected to weight loss of approximatively 5%. In the next step, the temperature is usually raised above 205°C to approximatively 220°C, which causes the colour of the beans to darken in colour with a weight loss of approximatively 13%. The resulting chemical process is called pyrolysis and is characterized by a change in the chemical composition of the beans as well as release of $CO_2$. During pyrolysis a step often referred to as the second crack occurs between 225°C and 230°C, and the roast colour is defined as medium-dark brown. At this stage, the beans typically take on an oily sheen due to migration of the coffee oil to the surface of the coffee beans.

From 170°C to 200°C the sugars in the coffee beans usually begin to caramelize. The colour of the coffee beans is directly related to the caramelization of the sucrose in coffee and to Maillard reaction.

More diverse and more uniform control of the roasting temperature profile parameters directly impacts the final quality of the roasted coffee, meaning its colour, taste and aroma, as well as the level of undesired compounds such as Acrylamide.

The present invention is defined by the appended claims.

Therefore, a first object of the invention provides a method for roasting coffee beans comprising the steps of

a) heating the coffee beans by a heating rate between 20°C/minute and 40°C/minute until the temperature of the coffee beans is between 160°C and 220°C, and
b) heating the coffee beans by a heating rate between 1°C/minute and 10°C/minute,

said heating steps being performed in the same roasting chamber, wherein step b) is performed after step a).

The inventors have found that the particular roasting temperature profiles of the present invention for roasting coffee beans lead to a uniform roasting of the beans allowing to achieve the desired colour, taste and aroma profiles while significantly decreasing the levels of Acrylamide when compared to the levels of Acrylamide obtained using known industrial scale roasting methods.

In the present invention, the roasting temperature profile comprises two steps.

Typically, the starting coffee bean temperature, which means the coffee bean temperature when the beans are loaded into the roasting chamber, ranges between storage (which can be for example 4°C or ambient temperature) and pre-roasting temperature, typically up to 140°C.

In the first step a), the coffee beans are heated by a heating rate between 20°C/minute and 40°C/minute until the temperature of the coffee beans is between 160°C and 220°C. The advantage of the roasting profile in step a) is that the coffee beans are dried and the roasting is initiated but the formation of Acrylamide is reduced since the temperature at which it starts to degrade is rapidly reached.

In one embodiment, the coffee beans are heated in step a) until the temperature of the coffee beans is between 180°C and 220°C. In another embodiment, the coffee beans are heated in step a) until the temperature of the coffee beans is between 180° and 210°C, such as between 180°C and 200°C. In yet another embodiment, the coffee beans are heated in step a) until the temperature of the coffee beans is between 190°C and 220°C, or such as between 200°C and 220°C, or such as between 210°C and 220°C.

To achieve a temperature between 160°C and 220°C, the heating rate in step a) is between 20°C/minute and 40°C/minute. In another embodiment of the invention, the heating rate in step a) is between 25°C/minute and 40 °C/minute, or such as between 30°C/minute and 40°C/minute. In yet another embodiment, the heating rate in step a) is between 20°C/minute and 38°C/minute, or such as between 20°C/minute and 36°C/minute, or such as between 20°C/minute and 35°C/minute.

In another embodiment, the coffee beans are heated by a heating rate between 30°C/minute and 40°C/minute until the temperature of the coffee beans is between 160°C and 220°C.

In yet another embodiment of the present invention, the coffee beans are heated by a heating rate between 20°C/minute and 40°C/minute until the temperature of the coffee beans is between 180°C and 220°C.

In an additional embodiment of the present invention, the coffee beans are heated by a heating rate between 20°C/minute and 40°C/minute until the temperature of the coffee beans is between 180°C and 210°C.

In one aspect of the present invention, the coffee beans are heated in step a) for a duration of 6 minutes or less, such as for a duration of 5.5 minutes, or such as for a duration 5 minutes, or such as for a duration 4.5 minutes, or such as for a duration 4 minutes, or such as for a duration 3.5 minutes, or such as for a duration 3 minutes, or such as for a duration 2.5 minutes, or such as for a duration 2 minutes.

In another embodiment, the coffee beans are heated in step a) for a duration of between 2 and 6 minutes, such as for a duration of between 2 and 5 minutes, such as for a duration of between 2 and 4 minutes, such as for a duration of between 3 and 4 minutes. Minimizing the time to reach a temperature above 150°C (i.e. between 160°C and 220°C) has the advantage of minimizing the formation of the Acrylamide from precursors while achieving efficient drying of the coffee beans and initiating the roasting.

In the second step b), the coffee beans are heated by a heating rate between 1°C/min and 10°C/min. The roasting temperature profile of step b) results in keeping the roasting temperature within a temperature range where the Acrylamide is depleted while allowing caramelization and Maillard reaction to happen, thereby allowing the development of the desired colour, taste and aroma of the roasted coffee beans. Therefore, the longer the roasting temperature is maintained within this range, the more the aromas, colour and taste can develop and the more the Acrylamide will be degraded.

In one embodiment of the present invention, the coffee beans are heated by a heating rate in step b) between 1°C/min and 9°C/min, such as between 1°C/min and 8°C/min, such as between 1°C/min and 7°C/min, such as between 1°C/min and 6°C/min, such as between 1°C/min and 5°C/min.

In another embodiment, the coffee beans are heated by a heating rate in step b) between 2°C/min and 10°C/min, such as between 3°C/min and 10°C/min, such as between 4°C/min and 10°C/min, such as between 5°C/min and 10°C/min.

In yet another embodiment, the coffee beans are heated by a heating rate in step b) between 2°C/minute and 8°C/minute, such as between 3°C/minute and 7°C/minute, or such as between 4°C and 6°C/minute.

In a preferred embodiment, the coffee beans are heated in step b) by a heating rate between 1°C/min and 3°C/min.

In one embodiment, the step b) of the method according to the present invention is performed until a maximum temperature of 235°C is reached. This has the advantage of avoiding that second pyrolysis occurs, causing coffee bean colour, taste and aromas to develop more rapidly and before Acrylamide can be degraded. In a preferred embodiment the coffee beans are heated in step b) is performed until a maximum temperature of 230°C is reached.

In one embodiment of the present invention, the coffee beans are heated in step b) by a heating rate between 1°C/min and 10°C/min until a maximum temperature of 235°C.

In another embodiment, the coffee beans are heated in step b) by a heating rate between 1°C/min and 10°C/min until a maximum temperature of 230°C.

In a preferred embodiment, the coffee beans are heated in step b) by a heating rate between 1°C/min and 3°C/min until a maximum temperature of 235°C.

In a most preferred embodiment, the coffee beans are heated in step b) by a heating rate between 1°C/min and 3°C/min until a maximum temperature of 230°C.

In one aspect of the invention, the coffee beans are heated in step b) until the desired roasting colour is reached, but in a uniform and controlled way, which also avoid the development of undesired bitterness.

The heating steps of the roasting temperature profile according to the present invention are performed into the same roasting chamber. This allows having diverse roasting temperature profiles combined with more uniform roasting thereby allowing mitigation of undesirable compounds such as Acrylamide while delivering much greater specificity of taste, aroma and colour.

In one aspect of the invention, the method of the present invention further comprises a step c), performed after step b), and comprising heating of the coffee beans by a heating rate between 15°C/minute and 40°C/minute during maximum 3 minutes. In another embodiment, the heating rate is between 20°C/minute and 40°C/minute, such as between 25°C/minute and 40°C/minute, such as between 30 and 40°C. In yet another embodiment, the heating rate is between 15°C/minute and 35°C/minute, such as between 15°C/minute and 30°C minute, such as between 15°C/minute and 25°C/minute, such as 15°C/minute and 20°C/minute. This step allows achieving the desired colour, while preventing under-roasted coffee beans and pop-corn types of aroma typical of under-roasted coffee beans.

In a particular embodiment of the present invention, the heating rate in step c) is between 15°C/minute and 40°C during maximum 3 minutes.

In a preferred embodiment, the heating rate in step c) is between 15°C/minute and 40°C during less than 3 minutes.

In another embodiment, the heating in step c) is performed during less than 3 minute, such as during less than 2.5 minutes, such as during less than 2 minutes, such as during less than 1.5 minutes, such as during less than 1 minute, such as during less than 30 seconds.

In a particular embodiment of the present invention, step b) is immediately performed after step a).

In another particular embodiment, the roasting temperature profile comprises step b) performed immediately after step a), and step c) performed immediately after step b).

In a particular embodiment, the end point temperature (i.e. maximum temperature) reached in step b) or c) can be maintained until the desired colour and/or taste of the roasting coffee. This has the advantage to further develop colour and/or aroma while decreasing the level of Acrylamide.

In one particular embodiment of the present invention, the ratio between the heating rate of step a) and the heating rate of step b) is between 3 and 15. It has the advantage to maximize the time spent within the temperature range between 160°C and 220°C where the Maillard reaction takes place while avoiding burning of the coffee beans, which would lead to losses and development of undesired off-taste (bitterness, burned notes for example). In another embodiment, the ratio between the heating rate of step a) and the heating rate of step b) is comprised between 4 and 15, such as between 5 and 15, such as between 6 and 15, such as between 7 and 15, such as between s 8 and 15, such as between 9 and 15, such as between 10 and 15. In yet another embodiment, the ratio between the heating rate of step a) and the heating rate of step b) is comprised between 3 and 14, such as between 3 and 13, such as between 3 and 12, such as between 3 and 11, such as between 3 and 10.

Coffee beans used in the present invention are raw coffee beans that have not been subjected to severe heat treatment. The raw coffee beans may however been subjected to a pre-treatment before roasting, including but not restricted to thermal heat treatment (pre-heating), chemical or enzymatic pre-treatment. Therefore, in one embodiment of the present invention, the coffee beans are selected from the group comprising green coffee beans, steam treated green coffee beans, enzymatically treated green coffee beans, decaffeinated green coffee beans, green coffee beans pre-heated to between 30 °C and 140 °C and roasted coffee beans to above CTn 120.

Roast colour and roast time are useful indicators of taste, aroma and levels of undesirable compounds from a given coffee origin. In one embodiment, the coffee beans are roasted in until the coffee bean colour is below CTn of 60, or below CTn of 50, or below CTn of 40.

In one embodiment, the coffee beans are roasted in a hot air roasting chamber. In a preferred embodiment, the coffee beans are roasted in a rotating fluidized bed (RFB) roaster. In a most preferred embodiment, the heating rates between step a) and step b) are changed by introducing a stream of air or of cooling gas into the stream of combustion gases. The introduced air is usually at ambient temperature. The introduction of the air at ambient temperature or of cooling gas into the stream of hot combustion gases results in a drop in the heating rate allowing to obtain the roasting temperature profiles of the present invention. The stream of air or of cooling gas is introduced using an electrically-controlled valve which is positioned in the apparatus for providing and feeding air or cooling gas to the RFB roasting chamber. The electric control is designed to control the closure and the opening of the valve while the coffee beans are roasted in order to increase or decrease the heating rate and/or the roasting temperature.

The invention is further described with reference to the following examples. It will be appreciated that the invention as claimed is not intended to be limited in any way by these examples.

Example 1

• Method to measure CTn in the roasted coffee beans:

The roasting degree of the roasted coffee beans was determined by colour measurement with Neuhaus Neotec ColorTest II® (Neuhaus Neotec™). The roasting degree of the coffee beans is inversely proportional to the CTn values. A sample of 100g of roasted coffee beans was collected from the roaster and allowed to reach room temperature. The sample was milled using a Ditting grinder to an average particle size between 800 and 1000 $\mu$m. The freshly ground coffee was homogenized by mixing, and 40g of the grounded coffee were poured in a measuring sample cup and the surface was carefully flattened. The sample cup was then placed into the tray of the ColourTest II® instrument and the CTn value was measured. Result of the CTn values were expressed as the average of duplicates to the closest highest CTn unit. The lower the CTn value, the darker the coffee.

• Method to measure the Acrylamide levels in roasted coffee beans:

100g of roasted coffee beans were grounded using a Retsch® rotary mill using 0.5 mm sieve. 40 $\mu$g/ml of labelled isopotomer Acrylamide solution (internal standard) were added to 2 grams of grounded sample which were extracted in 20ml of water. The extraction is followed by the removal of non-polar interferences products by adding 5 ml of 2,2,4-Trimethylpentane under agitation for 60 minutes at room temperature. 3 ml of aqueous extract were collected after centrifugation (20 minutes, at 10°C at 4500 rpm) and diluted with 3 ml water. The aqueous fraction containing Acrylamide was then further purified by solid phase extraction on a Multimode®cartridge (Biotage™) followed by an extraction on an ENV+®cartridge (Biotage™). The Acrylamide contained in the extract was thereafter concentrated and analysed by LC-MS/MS. 5 $\mu$l of the sample was loaded on LC column Shodex RSpak DE-413 (Shodex™) at a flow rate 0.6 ml/min in Mobile phase A: 0.01% formic acid in water and Mobile phase B: 100% Methanol LC-MS grade. The compounds passed thereafter through MS/MS Applied Biosystems Sciex 5500qQq (AB Sciex™). Acrylamide detection was done using software Analyst® (AB Sciex™), based on the retention time specific to Acrylamide. Calculation of the concentration of Acrylamide in the unknown sample was obtained using the formula:

$$C_{SAA} = C_{Sd3\text{-}AA}*((A_{AA}/A_{d3\text{-}AA})\text{-}I)/S)$$

Where $C_{SAA}$ = concentration of Acrylamide in the unknown sample
$C_{Sd3\text{-}AA}$ = concentration of $d_3$-AA (internal standard) in the incurred sample in $\mu$g/kg
I = the intercept of the calibration curve
S = the slope of the calibration curve
$A_{AA}$ = Area of Acrylamide on chromatogram
$A_{d3\text{-}AA}$ = Area of $d_3$-Acrylamide on chromatogram

Results of Acrylamide are expressed without decimal in $\mu$g/kg, and 1 ppb = 1$\mu$g/kg.
The uncertainty of the measurement method was estimated to be between 13% and 15%.

Example 1 illustrates the roasting temperature profile obtained by the method of the present invention as compared to the temperature profile obtained in a drum roaster (with no ambient air introduction). It also illustrates that the level of undesired compound, i.e. Acrylamide, is significantly lower when the method of the present invention is applied to roast coffee beans as compared to roasting in a drum roaster.

Method according to the present invention was applied to roast coffee beans in the same roasting chamber. In step a), a 35kg batch of a mixture of Robusta and Arabica coffee beans was contacted into a Neotec™ rotating fluidized bed (RFB) roaster and fluidized with a stream of hot combustion gases, resulting in heating rate of 20.7°C/minute for a duration of 5 minutes. In step b), ambient temperature air was introduced into the stream of combustion gases resulting in a heating rate of 6.1°C/minute for a duration of 4.1 minutes.

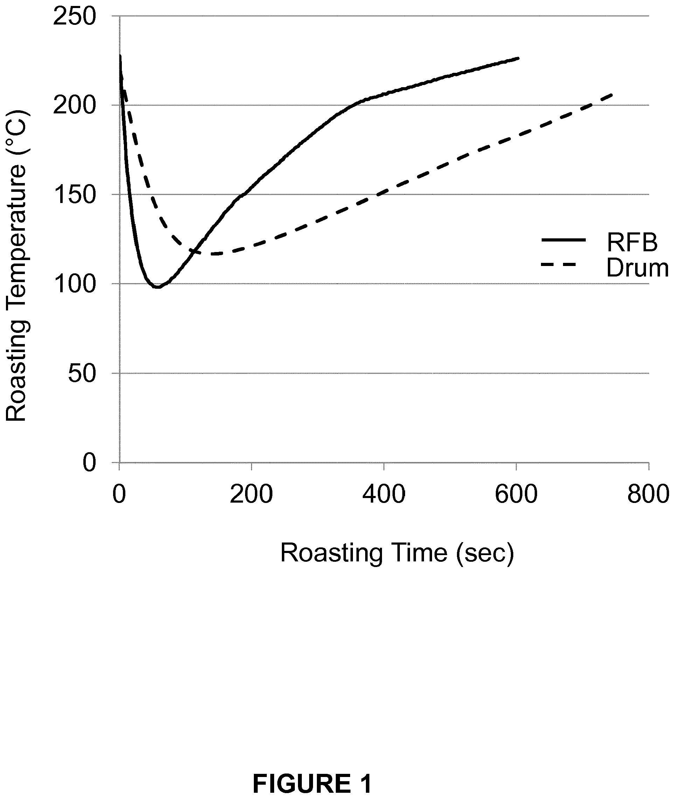

The roast colour achieved using the method according to the present invention, and measured according to the method described above using the Neuhaus Neotec ColorTest II® spectrophotometer was CTn of 74. The level of Acrylamide in the sample roasted by the method according to the present invention and measured according to the method described above was of 298 ppb. The roasting temperature profile according to the present invention is illustrated in Figure 1 (RFB - plain curve).

For comparative purposes, a one-step method of roasting was employed in a drum roaster. A 410 kg batch of a mixture of Robusta and Arabica coffee beans (same specifications as used above) were contacted with a stream of hot combustion gases resulting in a heating rate of 9°C/minute for a duration of 10 minutes.

The roast colour achieved using the drum roaster and measured according to the method described above using the Neuhaus Neotec ColorTest II® spectrophotometer was CTn of 75. The level of Acrylamide in the sample roasted in the drum roaster was of 369 ppb.

The roasting temperature profile obtained in the drum roaster is illustrated in Figure 1 (Drum - dotted curve).

As a conclusion, these results demonstrate that the roasting temperature profile of the present invention allows surprisingly a lower level of Acrylamide within a shorter roasting time. Indeed, it is typically understood that a longer roasting time would allow reducing the level of Acrylamide, but the one stage roasting performed in a drum roaster, although performed over a longer time, clearly delivered higher Acrylamide levels as compared to the levels obtained with the method of the present invention.

### Example 2

Example 2 illustrates the roasting temperature profile obtained by the method of the present invention as compared to the temperature profile obtained in a drum roaster (with no ambient air introduction). It also illustrates that the level of undesired compound, i.e. Acrylamide, is significantly lower, although the roasting time was shorter, when the method of the present invention is applied to roast coffee beans as compared to roasting in a drum roaster.

Method according to the present invention was applied to roast coffee beans in the same roasting chamber. In step a), a 400 kg batch of dry processed Arabica coffee beans was contacted and fluidized with a stream of hot combustion gases into a Neotec™ RFB roaster, resulting in a heating rate of 32.5°C/minute for a duration of 2 minutes. In step b) of the present method, air at ambient temperature was introduced into the stream of the hot combustion gases, resulting in a heating rate of 6.9°C/minute for a duration of 5.5 minutes.

The roast colour achieved using the method according to the present invention and measured according to the method described above using the Neuhaus Neotec ColorTest II® spectrophotometer was CTn of 141.

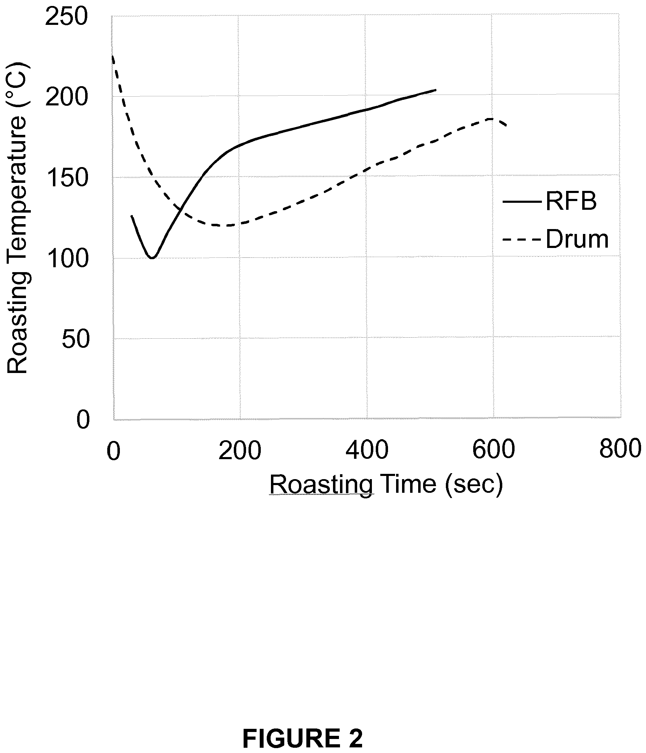

The level of Acrylamide in the sample roasted by the method according to the present invention and measured according to the method described above was of 377 ppb. The roasting temperature profile according to the present invention is illustrated in Figure 2 (RFB - plain curve).

For comparative purposes, a one-step method of roasting was employed in a drum roaster. A 262 kg batch of dry processed Arabica coffee beans (same specification as above) was contacted with a stream of hot combustion gases, resulting in a heating rate of 7.9°C/minute for a duration of 7.5 minutes.

The roast colour achieved using the drum roaster and measured according to the method described above using the Neuhaus Neotec ColorTest II® spectrophotometer was CTn of 154. The level of Acrylamide in the sample roasted in the drum roaster was of 518 ppb.

The roasting temperature profile obtained in the drum roaster is illustrated in Figure 2 (Drum - dotted curve).

### Example 3

This example illustrates the roasting temperature profile obtained by the method of the present invention as compared to the temperature profile obtained in a paddle roaster (with no ambient air introduction).

Method according to the present invention was applied to roast coffee beans in a single roasting chamber. In step a), a 330 kg batch of a mixture of Arabica and Robusta coffee beans was contacted and fluidized with a stream of hot combustion gases into a Neotec™ RFB roaster, resulting in a heating rate of 35.6°C/minute for a duration of 2.3 minutes. In step b), air at ambient temperature was introduced into the stream of hot combustion gases, resulting in a heating rate of 6.3°C/minute for a duration of 3.5 minutes.

The roast colour achieved using the method according to the present invention and measured according to the method described above using the Neuhaus Neotec ColorTest II® spectrophotometer was CTn of 95.

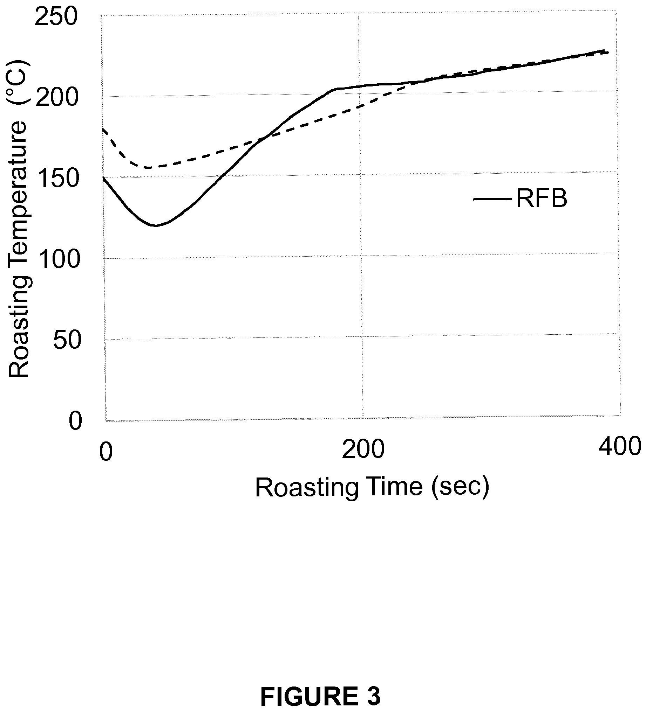

The level of Acrylamide in the sample roasted by the method according to the present invention and measured according to the method described above was of 337 ppb. The roasting temperature profile according to the present invention is illustrated in Figure 3 (RFB - plain curve).

For comparative purposes, a two-steps method of roasting was employed in a paddle roaster. A 330 kg batch of mixture of Arabica and Robusta coffee beans (same specification as above) was contacted with a stream of hot combustion gases, resulting in a heating rate of 14.5°C/minute for a duration of 3.7 minutes, followed by a stage with a 6.4°C/min for a duration of 2.2 minutes. The roast colour achieved using the paddle roaster and measured according to the method described above using the Neuhaus Neotec ColorTest II® spectrophotometer was CTn of 95.

The level of Acrylamide in the sample roasted in the paddle roaster was of 466 ppb.

The roasting temperature profile obtained in the paddle roaster is illustrated in Figure 3 (Paddle - dotted curve).

It can be seen from the Figure 3 that the ratio between the heating rate of step a) and step b) according to the present invention cannot be achieved in the paddle roaster, resulting in a different temperature profile. Indeed, the slope of the heating rate in the paddle roaster (dotted line in Figure 3) appears almost constant although the heating rate was significantly decreased. The Acrylamide level obtained using the temperature profile of the present invention allowed to decrease significantly the level of Acrylamide when compared to the level of Acrylamide obtained in the paddle roaster.

Example 4

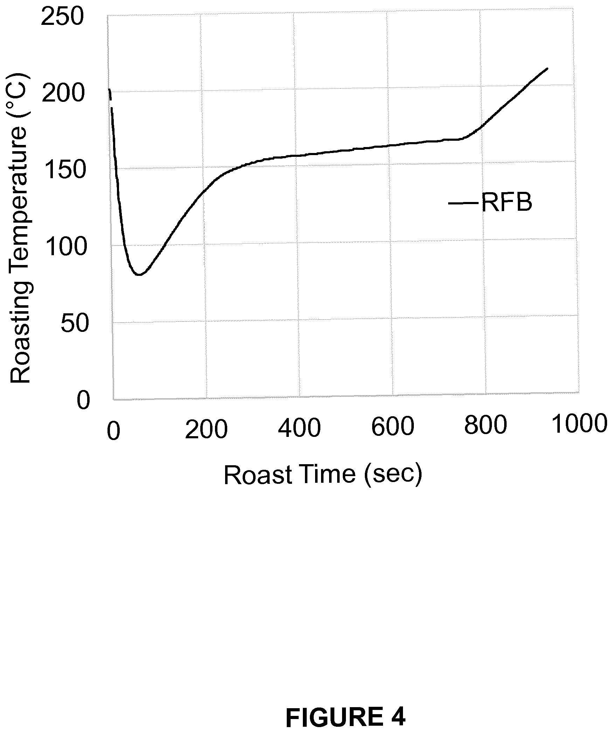

This example illustrates the roasting temperature profile according to the present invention comprising the heating steps a), b) and c).
Method according to the present invention was applied to roast coffee beans in the same roasting chamber. In step a), a 35kg batch of dry processed Arabica coffee beans was contacted into a Neotec™ rotating fluidized bed (RFB) roaster and fluidized with a stream of hot combustion gases, resulting in heating rate of 21.2°C/minute for a duration of 3 minutes. In step b), ambient temperature air was introduced into the stream of combustion gases resulting in a heating rate of 2.4°C/minute for a duration of 8.7 minutes. In step c), the introduction of ambient air is discontinued, resulting in heating rate of 15.3°C/minute for a duration of 2.9 minutes.
The roast colour achieved using the method according to the present invention, and measured according to the method described above using the Neuhaus Neotec ColorTest II® spectrophotometer, was CTn of 74.
The level of Acrylamide in the sample roasted by the method according to the present invention and measured according to the method described above was of 298 ppb. The roasting temperature profile according to the present invention is illustrated in Figure 4 (RFB - plain curve).
Although the invention has been described by way of example, it should be appreciated that variations and modifications may be made without departing from the scope of the invention as defined in the claims. Furthermore, where known equivalents exist to specific features, such equivalents are incorporated as if specifically referred in this specification.

**Claims**

1. A method for roasting coffee beans comprising the steps of

   a) heating the coffee beans by a heating rate between 20°C/minute and 40°C/minute until the temperature of the coffee beans is between 160°C and 220°C, and
   b) heating the coffee beans by a heating rate between 1°C/min and 10°C/minute,
   said heating steps being performed in the same roasting chamber, wherein step b) is performed after step a).

2. The method according to claim 1, further comprising step c) performed after step b) and comprising heating of the coffee beans by a heating rate between 15°C/minute and 40°C/minute during maximum 3 minutes.

3. The method according to claim 1 or 2, wherein step a) is performed for a duration of 6 minutes or less.

4. A method according to any of the preceding claims, wherein step b) is performed until a maximum temperature of 235°C is reached.

5. The method according to any of the preceding claims, wherein the coffee beans are heated in step b) by a heating rate between 1°C/min and 3°C/min.

6. The method according to any of claims 2-5, wherein the heating rate in step c) is above 20°C/min during maximum 30 seconds.

7. The method according to any of the preceding claims, wherein step b) is performed immediately after step a).

8. The method according to any of the preceding claims, wherein the ratio between the heating rate of step a) and the heating rate of step b) of the roasting temperature profile is between 3 and 15.

9. The method according to any of the preceding claims, wherein the coffee beans are selected from the group comprising green coffee beans, steam treated green coffee beans, enzymatically treated green coffee beans, decaffeinated green coffee beans, green coffee beans pre-heated to between 30 °C and 140 °C and roasted coffee beans to above CTn 120.

10. The method according to any of the preceding claims, wherein the coffee beans are roasted in a rotating fluidized bed roaster.

**Patentansprüche**

1. Verfahren zum Rösten von Kaffeebohnen, umfassend folgende Schritte:

   a) Erhitzen der Kaffeebohnen mit einer Heizgeschwindigkeit zwischen 20 °C/Minute und 40 °C/Minute, bis die Temperatur der Kaffeebohnen zwischen 160 °C und 220 °C liegt, und
   b) Erhitzen der Kaffeebohnen mit einer Heizgeschwindigkeit zwischen 1 °C/Minute und 10 °C/Minute,
   wobei die Erhitzungsschritte in derselben Röstkammer erfolgen, wobei Schritt b) nach Schritt a) durchgeführt wird.

2. Verfahren nach Anspruch 1, ferner umfassend Schritt c), der nach Schritt b) durchgeführt wird, und umfassend das Erhitzen der Kaffeebohnen mit einer Heizgeschwindigkeit zwischen 15 °C/Minute und 40 °C/Minute während maximal 3 Minuten.

**3.** Verfahren nach Anspruch 1 oder 2, wobei Schritt a) für eine Dauer von 6 Minuten oder weniger durchgeführt wird.

**4.** Verfahren nach einem der vorstehenden Ansprüche, wobei Schritt b) durchgeführt wird, bis eine maximale Temperatur von 235 °C erreicht ist.

**5.** Verfahren nach einem der vorstehenden Ansprüche, wobei die Kaffeebohnen in Schritt b) mit einer Heizgeschwindigkeit zwischen 1 °C/min und 3 °C/min erhitzt werden.

**6.** Verfahren nach einem der Ansprüche 2-5, wobei die Heizgeschwindigkeit in Schritt c) maximal 30 Sekunden lang über 20 °C/min liegt.

**7.** Verfahren nach einem der vorstehenden Ansprüche, wobei Schritt b) unmittelbar nach Schritt a) durchgeführt wird.

**8.** Verfahren nach einem der vorstehenden Ansprüche, wobei das Verhältnis zwischen der Heizgeschwindigkeit von Schritt a) und der Heizgeschwindigkeit von Schritt b) des Rösttemperaturprofils zwischen 3 und 15 liegt.

**9.** Verfahren nach einem der vorstehenden Ansprüche, wobei die Kaffeebohnen ausgewählt sind aus der Gruppe umfassend grüne Kaffeebohnen, dampfbehandelte grüne Kaffeebohnen, enzymatisch behandelte grüne Kaffeebohnen, entcoffeinierte grüne Kaffeebohnen, auf zwischen 30 °C und 140 °C vorgewärmte grüne Kaffeebohnen und auf über CTn 120 geröstete Kaffeebohnen.

**10.** Verfahren nach einem der vorstehenden Ansprüche, wobei die Kaffeebohnen in einem rotierenden Wirbelschichtröster geröstet werden.

**Revendications**

**1.** Procédé de torréfaction de grains de café comprenant les étapes consistant à

> a) chauffer les grains de café par une vitesse de chauffage comprise entre 20 °C/minute et 40 °C/minute jusqu'à ce que la température des grains de café soit comprise entre 160 °C et 220 °C, et
> b) chauffer les grains de café par une vitesse de chauffage comprise entre 1 °C/min et 10 °C/minute,
> lesdites étapes de chauffage étant mises en œuvre dans la même chambre de torréfaction, dans lequel l'étape b) est mise en œuvre après l'étape a).

**2.** Procédé selon la revendication 1, comprenant en outre une étape c) mise en œuvre après l'étape b) et comprenant le chauffage des grains de café par une vitesse de chauffage comprise 15 °C/minute et 40 °C/minute pendant un maximum de 3 minutes.

**3.** Procédé selon la revendication 1 ou 2, dans lequel l'étape a) est mise en œuvre pendant une durée de 6 minutes ou moins.

**4.** Procédé selon l'une quelconque des revendications précédentes, dans lequel l'étape b) est mise en œuvre jusqu'à ce qu'une température maximale de 235 °C soit atteinte.

**5.** Procédé selon l'une quelconque des revendications précédentes, dans lequel les grains de café sont chauffés à l'étape b) par une vitesse de chauffage comprise entre 1 °C/min et 3 °C/min.

**6.** Procédé selon l'une quelconque des revendications 2 à 5, dans lequel la vitesse de chauffage à l'étape c) est supérieure à 20 °C/min pendant un maximum de 30 secondes.

**7.** Procédé selon l'une quelconque des revendications précédentes, dans lequel l'étape b) est mise en œuvre immédiatement après l'étape a).

**8.** Procédé selon l'une quelconque des revendications précédentes, dans lequel le rapport entre la vitesse de chauffage de l'étape a) et la vitesse de chauffage de l'étape b) du profil de température de torréfaction est compris entre 3 et 15.

**9.** Procédé selon l'une quelconque des revendications précédentes, dans lequel les grains de café sont choisis dans le groupe comprenant des grains de café verts, des grains de café verts traités à la vapeur, des grains de café verts traités enzymatiquement, des grains de café verts décaféinés, des grains de café verts préchauffés entre 30 °C et 140 °C et des grains de café torréfiés au-dessus de CTn 120.

**10.** Procédé selon l'une quelconque des revendications précédentes, dans lequel les grains de café sont torréfiés dans un torréfieur à lit fluidisé rotatif.

**FIGURE 1**

**FIGURE 2**

**FIGURE 3**

**FIGURE 4**

## REFERENCES CITED IN THE DESCRIPTION

**Patent documents cited in the description**

- EP 1038445 A2
- IE 20000694 A1
- GB 1186606 A1
- US 5681607 A
- US 3964175 A

**Non-patent literature cited in the description**

- Acrylamide Toolbox. FoodDrink, 2013, 49
- **V.R. PREEDY.** Processing and Impact on active components in food. Academic Press, 2014, 577